(19)

Europäisches Patentamt
European Patent Office
Office européen des brevets

(11) **EP 3 345 876 A1**

(12) **EUROPEAN PATENT APPLICATION**
published in accordance with Art. 153(4) EPC

(43) Date of publication:
**11.07.2018 Bulletin 2018/28**

(51) Int Cl.:
*C03C 3/091* (2006.01)     *A61J 1/05* (2006.01)
*C03B 23/09* (2006.01)     *C03C 3/093* (2006.01)
*C03C 3/11* (2006.01)

(21) Application number: **16841770.7**

(22) Date of filing: **29.08.2016**

(86) International application number:
**PCT/JP2016/075135**

(87) International publication number:
**WO 2017/038738 (09.03.2017 Gazette 2017/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **03.09.2015 JP 2015173791
15.09.2015 JP 2015181342
22.10.2015 JP 2015207709**

(71) Applicant: **Nippon Electric Glass Co., Ltd.
Otsu-shi, Shiga 520-8639 (JP)**

(72) Inventors:
• **KIMURA Miki**
 **Otsu-shi**
 **Shiga 520-8639 (JP)**
• **NISHIDA Shinsaku**
 **Otsu-shi**
 **Shiga 520-8639 (JP)**
• **CHOJU Ken**
 **Otsu-shi**
 **Shiga 520-8639 (JP)**
• **IWASAKI Takanori**
 **Otsu-shi**
 **Shiga 520-8639 (JP)**

(74) Representative: **Henkel, Breuer & Partner
Patentanwälte
Maximiliansplatz 21
80333 München (DE)**

(54) **BOROSILICATE GLASS FOR MEDICINE CONTAINERS, GLASS TUBE FOR MEDICINE CONTAINERS AND METHOD FOR PRODUCING MEDICINE CONTAINER**

(57)     Provided is a borosilicate glass for a pharmaceutical container which has good processability in spite of not including BaO. The borosilicate glass for a pharmaceutical container includes $SiO_2$, $Al_2O_3$, $B_2O_3$, and $R_2O$ (R is one or more kinds selected from Li, Na, and K) as essential components, in which BaO is not substantially included, and a water content in glass is 0.30 to 0.80/mm in terms of $\beta$-OH value.

FIG. 2

DEPTH FROM INNER SURFACE OF TUBULAR GLASS(nm)

**Description**

Technical Field

The present invention relates to borosilicate glass for a pharmaceutical container which is used for glass for a tubular bottle such as a vial or an ampule or a syringe of an injector, a glass tube for a pharmaceutical container, and a manufacturing method for a pharmaceutical container.

Background Art

The following characteristics are necessary for the borosilicate glass for a pharmaceutical container such as a vial or an ampule.

(a) A component in an aqueous-based medicament present in the container and a glass component do not react with each other.
(b) Chemical durability and hydrolytic resistance are high so as not to contaminate an aqueous-based medicament present in the container.
(c) A linear thermal expansion is low such that breakage due to thermal shock does not occur in a production process of a glass tube or at the time of converting process into a vial, an ampule and the like.
(d) A quantity of heat at the time of converting process into a vial, an ampule and the like can be decreased so that an inner surface of a container is not deteriorated due to an evaporant from glass, after the converting process.

A standard borosilicate glass for a pharmaceutical container satisfying these required characteristics includes $SiO_2$, $B_2O_3$, $Al_2O_3$, $Na_2O$, $K_2O$, $CaO$, $BaO$, and a small amount of a fining agent, as constituent components.

Citation List

Patent Document

Patent Document 1: JP-A-2014-214084

Summary of Invention

Problems to be solved by the invention

In recent years, development of aqueous-based medicaments present in the containers has proceeded and aqueous-based medicaments having higher medical efficacy have been used. Among these aqueous-based medicaments, there is an aqueous-based medicament which is chemically unstable and easily denatured, and has high reactivity with glass. As a result, a glass having higher chemical durability or hydrolytic resistance than those in the related art is required for a borosilicate glass for a pharmaceutical container such as a vial or an ampule. In addition, in a case where a glass includes $BaO$, barium-feldspar crystals are easily precipitated and productivity is decreased due to a reaction with an alumina-based refractory at the time of glass melting, and Ba ions extracted from the glass may be reacted with sulfate ions in an aqueous-based medicament to generate an insoluble precipitate.
From such circumstances, in Patent Document 1, for example, proposed is a glass having high hydrolytic resistance without including $BaO$.
However, a pharmaceutical container such as a vial or an ampule is manufactured by locally heating and converting tubular glass with a burner. At the time of performing the heating with a burner, $B_2O_3$ or $Na_2O$ in the glass is evaporated and condensed on an inner surface of a pharmaceutical container, and a heterogeneous layer may be formed. Chemical durability or hydrolytic resistance of the glass is substantially lowered due to the formation of the heterogeneous layer, $B_2O_3$ or $Na_2O$ is extracted from the heterogeneous layer during the storage of the aqueous-based medicament or at the time of an autoclaving treatment after filling a container with the aqueous-based medicament, and there is a possibility that an alteration of an aqueous-based medicament component or a change in pH of the aqueous-based medicament occurs. In particular, since the glass without including $BaO$ as in Patent Document 1 has lower processability than that of glass including $BaO$, a larger quantity of heat is required at the time of converting process into a container as compared with the related art. As a result, an amount of $B_2O_3$ or $Na_2O$ evaporated from the glass tends to increase.
An object of the invention is to provide a borosilicate glass for a pharmaceutical container which has good processability in spite of not including $BaO$.

Means for Solving the Problems

The inventors have carried out various experiments and found that, when a water content in a glass is high, absorption in an infrared region increases, and the quantity of heat at the time of converting process into a container can be reduced.

According to the invention, there is provided a borosilicate glass for a pharmaceutical container including $SiO_2$, $Al_2O_3$, $B_2O_3$, and $R_2O$ (R is one or more kinds selected from Li, Na, and K) as essential components, in which BaO is not substantially included, and a water content in the glass is 0.30 to 0.80/mm in terms of $\beta$-OH value. The expression of "BaO is not substantially included" means not positively adding BaO. It is not the gist of excluding BaO contaminated as impurities. More specifically, the expression of "BaO is not substantially included" means that a content of BaO is equal to or smaller than 0.05% in terms of mass%.

According to the above configuration, since BaO is not included, barium-feldspar crystals which may be produced by reaction between BaO and an alumina-based refractory are not precipitated at the time of glass melting or forming. In addition, a glass can be obtained, in which the amount of Ba ions extracted from the glass is small, and sulfate ions in an aqueous-based medicament and an insoluble precipitate are hardly formed.

In addition, according to the above configuration, absorption in an infrared region (in a vicinity of 2800 nm) occurs due to a hydroxyl group present in the glass. Therefore, the glass absorbs infrared light emitted at the time of converting process into a container with a burner. The glass can be efficiently heated, and as a result, it becomes possible to reduce quantity of heat required at the time of converting process into a container. Accordingly, an amount of $B_2O_3$, $Na_2O$, or the like evaporated at the time of converting process into a container can be reduced and a pharmaceutical container in which a heterogeneous layer is hardly formed on an inner surface thereof can be obtained. As a result, chemical durability or hydrolytic resistance of the pharmaceutical container increases, an alteration of an aqueous-based medicament component or a change in pH of the aqueous-based medicament during the storage of the aqueous-based medicament or due to an autoclaving treatment after filling the pharmaceutical container with the aqueous-based medicament hardly occurs. A term "quantity of heat" represents a quantity of heat supplied from flame of a burner, and corresponds to a sum of a quantity of heat that contributes to heating of the glass and a quantity of heat that contributes to heating of ones other than glass.

According to the invention, it is preferable that the borosilicate glass for a pharmaceutical container includes 70.0% to 75.5% of $SiO_2$, 6.3% to 11% of $Al_2O_3$, 3.0% to 11.5% of $B_2O_3$, 4.0% to 8.5% of $Na_2O$, 0% to 5.0% of $K_2O$, and 0% to 0.2% of $Li_2O$ in terms of mass%.

According to the above configuration, it becomes easy to obtain a glass that is excellent in chemical durability or hydrolytic resistance.

In the invention, it is preferable that each content of MgO, CaO, and SrO is 0 to 4 mass%.

According to the above configuration, it becomes easy to obtain a glass in which deterioration of chemical durability or hydrolytic resistance is suppressed and of which a working temperature is low.

In the invention, it is preferable that MgO + CaO + SrO is 0 to 4 mass%. The expression of "MgO + CaO + SrO" means a total content of MgO, CaO, and SrO.

In the invention, it is preferable that MgO + CaO is equal to or greater than 0 and smaller than 1 mass%.

According to the above configuration, it becomes easy to obtain a glass that is excellent in hydrolysis characteristic.

In the invention, it is preferable that $Na_2O$ + $K_2O$ + $Li_2O$ is 5 to 10 mass%. The expression of "$Na_2O$ + $K_2O$ + $Li_2O$" means a total content of $Na_2O$, $K_2O$, and $Li_2O$.

According to the above configuration, it becomes easy to obtain a glass in which deterioration of chemical durability or hydrolytic resistance is suppressed and of which a working temperature is low.

In the invention, it is preferable that a content of $Fe_2O_3$ is equal to or greater than 0 and smaller than 0.2 mass%.

According to the above configuration, it becomes possible that coloring of a glass is effectively prevented.

In the invention, it is preferable that a value of $(MgO + CaO + SrO)/(Na_2O + K_2O + Li_2O)$ is adjusted to be equal to or smaller than 0.10 in terms of mass ratio. The expression of "$(MgO + CaO + SrO)/(Na_2O + K_2O + Li_2O)$" represents a value that is obtained by dividing the total content of MgO, CaO, and SrO by the total content of $Na_2O$, $K_2O$, and $Li_2O$.

According to the above configuration, it becomes easy to obtain glass in which deterioration of chemical durability or hydrolytic resistance is suppressed and of which a working temperature is low.

In the invention, it is preferable that $CaO/(Na_2O + K_2O + Li_2O)$ is 0 to 0.10 in terms of mass ratio. The expression of "$CaO/(Na_2O + K_2O + Li_2O)$" represents a value that is obtained by dividing a content of CaO by the total content of $Na_2O$, $K_2O$, and $Li_2O$.

According to the above configuration, a glass with high hydrolytic resistance can be obtained.

In the invention, it is preferable that $K_2O/Na_2O$ is 0.2 to 1.0 in terms of mass ratio. The expression of $K_2O/Na_2O$ represents a value obtained by dividing a content of $K_2O$ by a content of $Na_2O$.

According to the above configuration, it becomes easy to obtain glass in which deterioration of hydrolytic resistance is suppressed and of which a working temperature is low.

In the invention, it is preferable that $Al_2O_3/(Na_2O + K_2O + Li_2O)$ is 0.7 to 1.5 in terms of mass ratio. The expression of "$Al_2O_3/(Na_2O + K_2O + Li_2O)$" represents a value that is obtained by dividing a content of $Al_2O_3$ by the total content of $Na_2O$, $K_2O$, and $Li_2O$.

According to the above configuration, it becomes possible to further improve hydrolysis performance.

In the invention, it is preferable that, in a glass grains test method of a hydrolytic resistance test based on EP 8.0, a consumption of 0.02 mol/L hydrochloric acid per unit glass mass is equal to or smaller than 0.030 mL.

In the invention, it is preferable that, in an acid resistance test based on DIN12116, a weight loss per area is equal to or smaller than 1.0 mg/dm$^2$.

In the invention, it is preferable that a working temperature is 1150°C to 1250°C. The "working temperature" is a temperature at which a viscosity of the glass is $10^4$ dPa·s.

According to the above configuration, a converting temperature at the time of manufacturing a glass container such as an ampule or a vial from a glass tube can be decreased and the amount of $B_2O_3$ or an alkali metal oxide component evaporated from the glass can be significantly decreased. As a result, it is possible to prevent an alteration of an aqueous-based medicament component stored in the glass container or an increase in pH of the aqueous-based medicament from being caused.

In the invention, it is preferable that a liquidus viscosity is equal to or greater than $10^{4.5}$ dPa·s.

According to the above configuration, it is preferable that devitrification at the time of forming hardly occurs, even in a case of using a Danner method for the forming of a glass tube.

According to the invention, there is provided a glass tube for a pharmaceutical container, made of the borosilicate glass for a pharmaceutical container described above.

The inventors have found that an amount of $B_2O_3$ or $Na_2O$ evaporated has a relation with not only a composition or water content of a glass tube but also dimensional accuracy of the glass tube, and it is possible to reduce quantity of heat required for converting processing into a container by reducing a bend or thickness deviation of the glass tube and increasing processability.

According to the invention based on the finding, there is provided a glass tube for a pharmaceutical container, including a borosilicate glass in which the borosilicate glass including $SiO_2$, $Al_2O_3$, $B_2O_3$, and $R_2O$ (R is one or more kinds selected from Li, Na, and K) as essential components, and substantially not including BaO, in which a bend of the glass tube is equal to or smaller than 6.0 mm, and a thickness deviation of the glass tube is equal to or smaller than 15%. The expression "bend of a glass tube" means a bend per 1000 mm of tube length. In addition, the thickness deviation indicates a value of (maximum thickness - minimum thickness)/target thickness, that is, the value is obtained by dividing the difference between a maximum and a minimum thickness of the glass tube by a target thickness and is expressed as a percentage.

According to the above configuration, since BaO is not included, barium-feldspar crystals which may be produced by reaction between BaO and an alumina-based refractory are not precipitated at the time of glass melting or forming. In addition, a glass can be obtained, in that the amount of Ba ions extracted from the glass is small, and sulfate ions in an aqueous-based medicament and an insoluble precipitate are hardly formed.

In addition, according to the above configuration, when manufacturing a glass container such as an ampule or a vial from a glass tube, since a bend of the glass tube is small, it becomes easy to evenly supply heat of a burner to the glass tube being rotating. In addition, since the thickness deviation of the glass tube is small, it becomes easy to evenly raise temperature of the glass tube by heat of a burner. As a result of synergistic effect of these, it becomes possible to reduce the quantity of heat required for converting process into a container. Accordingly, an amount of $B_2O_3$, $Na_2O$, or the like evaporated at the time of converting process into a container can be reduced and a pharmaceutical container in which a heterogeneous layer is hardly formed on an inner surface thereof can be obtained. As a result, chemical durability or hydrolytic resistance of the pharmaceutical container increases, an alteration of an aqueous-based medicament component or a change in pH of the aqueous-based medicament during the storage of the aqueous-based medicament or due to an autoclaving treatment after filling the pharmaceutical container with the aqueous-based medicament hardly occurs.

In the invention, it is preferable that the borosilicate glass includes 70.0% to 75.5% of $SiO_2$, 6.3% to 11.0% of $Al_2O_3$, 3.0% to 11.5% of $B_2O_3$, 4.0% to 8.5% of $Na_2O$, 0% to 5.0% of $K_2O$, and 0% to 0.2% of $Li_2O$ in terms of mass%.

However, in a case where a heterogeneous layer caused by evaporation of $B_2O_3$ or $Na_2O$ from a glass is present in an inner surface of a pharmaceutical container, the inner surface of the container may be peeled off to cause generation of insoluble foreign materials, which are called flakes, in the aqueous-based medicament.

The inventors have found that the glass tube of the related art has $Na_2O$ with high content in the vicinity of a surface, this fact is related to form the heterogeneous layer, and an increase in a content of $Na_2O$ is caused by extraction of $Na_2O$ component from refractory or the like used when forming a glass tube.

According to the invention based on the finding, there is provided a glass tube for a pharmaceutical container including a borosilicate glass, in which the borosilicate glass includes $SiO_2$, $Al_2O_3$, $B_2O_3$, and $R_2O$ (R is one or more kinds selected from Li, Na, and K) as essential components, and substantially does not include BaO, and a value of (atomic concentration of Na)/(atomic concentration of Na + atomic concentration of Si) in a region from an inner surface of the glass tube to a depth of 200 nm is equal to or greater than 0.01 and smaller than 0.5. The expression of "(atomic concentration of Na)/(atomic concentration of Na + atomic concentration of Si)" indicates a value that is obtained by dividing the atomic concentration of Na by the sum of the atomic concentration of Na and the atomic concentration of Si, that is, the value is the maximum value in the region from the surface of the glass to a depth of 200 nm.

According to the above configuration, since BaO is not included, barium-feldspar crystals which may be produced by reaction between BaO and an alumina-based refractory are not precipitated at the time of glass melting or forming. In addition, a glass in which the amount of Ba ions extracted from the glass is small, and sulfate ions in an aqueous-based medicament and an insoluble precipitate are hardly formed, is obtained.

In addition, according to the above configuration, since the concentration of $Na_2O$ in the vicinity of the surface is optimized, it is possible to prevent such as $B_2O_3$ or $Na_2O$ in the glass from being evaporated at the time of performing heating with a burner, it is possible to prevent the heterogeneous layer from being formed. In addition, it is possible to maintain excellent chemical durability or hydrolytic resistance, even after various thermal treatments at the time of converting process to a container. It is possible to prevent an alteration or pH increasing of an aqueous-based medicament component and to prevent flakes from being generated.

In the invention, it is preferable that the borosilicate glass includes 65% to 80% of $SiO_2$, 5% to 15% of $Al_2O_3$, 2% to 12% of $B_2O_3$, 3% to 10% of $Na_2O$, 0% to 5% of $K_2O$, 0% to 5% of $Li_2O$, 0% to 5% of MgO, 0% to 5% of CaO, and 0% to 5% of SrO in terms of mass%, and a value of $Al_2O_3/(Na_2O + K_2O + Li_2O + MgO + CaO + SrO + B_2O_3)$ is 0.35 to 0.60 in terms of mass ratio.

According to the invention, there is provided a pharmaceutical container made of the borosilicate glass for a pharmaceutical container described above.

According to the invention, there is provided a manufacturing method for a pharmaceutical container, in which the pharmaceutical container is manufactured using the glass tube for a pharmaceutical container described above.

Brief Description of Drawings

Fig. 1 is a graph showing an analysis result of concentration distribution of $Na_2O$ in the vicinity of a surface of Sample No. 25.
Fig. 2 is a graph showing an analysis result of concentration distribution of $Na_2O$ in the vicinity of a surface of Sample No. 32.
Fig. 3 is a graph showing a result of hydrolytic resistance test before and after a thermal treatment.

Mode for Carrying Out the Invention

A borosilicate glass for a pharmaceutical container according to the invention includes $SiO_2$, $Al_2O_3$, $B_2O_3$, and $R_2O$ (R is one or more kinds selected from Li, Na, and K) as essential components.

In addition, the borosilicate glass for a pharmaceutical container according to the invention does not substantially include BaO. In a case where a glass composition includes BaO, crystals may be precipitated or a precipitate may be generated due to a reaction with an alumina-based refractory or a reaction between Ba ions extracted from the glass and sulfate ions in an aqueous-based medicament as described above.

The glass for a pharmaceutical container according the invention has 0.3/mm to 0.8/mm, 0.35/mm to 0.80/mm, and 0.4/mm to 0.75/mm of a water content in glass in terms of β-OH value. In particular, 0.45/mm to 0.70/mm of the water content is preferable. In a case where a β-OH value is excessively low, since absorption of infrared ray is small, heat of the burner is difficult to be transmitted, and it is necessary to convert with intense heat at the time of converting, which cause an alteration of an inner surface of the container. In addition, in a case where the β-OH value is excessively high, glass excessively absorbs infrared ray to rapidly heated with a burner. Therefore, the glass is easily softened and deformed and it is difficult to maintain a shape of the container at the time of converting.

The β-OH value representing the water content in glass can be obtained using the following equation. In a case where the water content of a glass tube is measured, the measurement may be performed after dividing the glass tube in half.

$$\beta\text{-OH value} = (1/t) \times \log 10(T_1/T_2)$$

t: Thickness of glass (mm)

$T_1$: Transmittance (%) in the reference wavelength 3846 cm$^{-1}$ (2600 nm) of reference wavelength

$T_2$: Transmittance (%) in the hydroxyl group absorption wavelength 3600 cm$^{-1}$ (2800 nm).

In the invention, a composition of borosilicate glass is not particularly limited, and it is preferable that the borosilicate glass includes 70.0% to 75.5% of $SiO_2$, 6.3% to 11% of $Al_2O_3$, 3.0% to 11.5% of $B_2O_3$, 4.0% to 8.5% of $Na_2O$, 0% to 5.0% of $K_2O$, and 0% to 0.2% of $Li_2O$ in terms of mass% and substantially does not include BaO. In addition, it is preferable that the borosilicate glass includes 65% to 80% of $SiO_2$, 5% to 15% of $Al_2O_3$, 2% to 12% of $B_2O_3$, 3% to 10% of $Na_2O$, 0% to 5% of $K_2O$, 0% to 5% of $Li_2O$, 0% to 5% of MgO, 0% to 5% of CaO, and 0% to 5% of SrO in terms of mass%, a value of $Al_2O_3/(Na_2O + K_2O + Li_2O + MgO + CaO + SrO + B_2O_3)$ is 0.35 to 0.60 in terms of mass ratio, and the borosilicate glass substantially does not include BaO. Hereinafter, a reason for limiting the range of the composition of each component as described above will be described. In the following description, the expression "%" means mass%, unless otherwise noted.

$SiO_2$ is one of the components configuring a glass network. The content of $SiO_2$ is 65% to 80% or 62% to 75.5%, preferably equal to or greater than 65% and smaller than 75.5%, equal to or greater than 67% and smaller than 75.5%, 70.0% to 75.5%, equal to or greater than 70.0% and smaller than 75.5%, or 70.0% to 75.0%, and particularly preferably 70.0% to 74.7%. In a case where the content of $SiO_2$ is excessively small, chemical durability decreases, and acid resistance required for the borosilicate glass for a pharmaceutical container decreases. On the other hand, in a case where the content of $SiO_2$ is excessively great, the liquidus viscosity decreases, devitrification easily occurs in the manufacturing step, thereby decreasing productivity.

$Al_2O_3$ is a component which prevents devitrification of the glass and improves chemical durability and hydrolytic resistance. The content of $Al_2O_3$ is preferably 5% to 15%, 6.3% to 11%, 6.4% to 10%, or 6.5% to 8.5%, and particularly preferably 6.7% to 8.0%. In a case where the content of $Al_2O_3$ is excessively small, the effects described above are not obtained. On the other hand, in a case where the content of $Al_2O_3$ is excessively great, the viscosity of the glass increases and a working temperature increases. The quantity of heat required at the time of converting process into a pharmaceutical container increases.

$B_2O_3$ has effects of not only decreasing a melting point of the glass, but also increasing a liquidus viscosity, and preventing devitrification. Accordingly, the content of $B_2O_3$ is 2% to 12%, 3.0% to 11.5%, 5.5% to 11.4%, or 8.5% to 11.0%, and particularly equal to or greater than 9% and smaller than 11.0%. In a case where the content of $B_2O_3$ is excessively small, a working temperature increases and quantity of heat required at the time of converting process into a pharmaceutical container increases. On the other hand, in a case where the content of $B_2O_3$ is excessively great, hydrolytic resistance or chemical durability decreases.

$Na_2O$ has effects of decreasing viscosity of the glass and increasing a coefficient of linear thermal expansion. The content of $Na_2O$ is preferably 3% to 10%, 3.2% to 8.5%, 3.5% to 8.5%, 4.0% to 8.5%, 4% to 8.3%, 4% to 8%, 4.2% to 8.4%, or 4.5% to 8.0%, and particularly preferably 5.0% to 7.0%. In a case where the content of $Na_2O$ is excessively small, a working temperature increases and quantity of heat required at the time of converting process into a pharmaceutical container increases. On the other hand, in a case where the content of $Na_2O$ is excessively great, hydrolytic resistance decreases.

$K_2O$ has effects of decreasing viscosity of the glass and increasing a coefficient of linear thermal expansion, in the same manner as $Na_2O$. The content of $K_2O$ is preferably 0% to 5%, 0.1% to 5%, 0.5% to 4.5%, or 1.0% to 3%, and particularly preferably 1.5% to 3.0%. In a case where the content of $K_2O$ is excessively great, hydrolytic resistance decreases.

It is desired that both components of $K_2O$ and $Na_2O$ are used together, because hydrolytic resistance is improved due to a mixed alkali effect. In order to improve hydrolytic resistance, $K_2O/Na_2O$ is preferably 0.2 to 1, 0.20 to 0.95, or 0.2 to 0.8, and particularly preferably 0.2 to 0.7 in terms of mass ratio. In a case where the ratio is small, hydrolytic resistance decreases. On the other hand, in a case where the ratio is great, a working temperature increases and quantity of heat required at the time of converting process into a pharmaceutical container increases. In addition, an amount of $B_2O_3$ or $Na_2O$ evaporated at the time of converting process into a pharmaceutical container increases.

$Li_2O$ has effects of decreasing a viscosity of the glass and increasing a coefficient of linear thermal expansion, in the same manner as $Na_2O$ and $K_2O$. However, in a case where $Li_2O$ is added, a refractory easily corrodes at the time of glass melting. In addition, production cost increases. Accordingly, the content of $Li_2O$ is preferably 0% to 5%, 0% to 0.2%, 0% to 0.1%, or 0% to 0.05%, and particularly preferably 0% to 0.01%. Unless there are special circumstances, other alkali metal oxides other than $Li_2O$ are desirably used.

A total content of $Li_2O$, $Na_2O$, and $K_2O$ is preferably 5% to 10%, and particularly preferably 6% to 9%. In a case where the total content of these components is small, the working temperature increases. In addition, the total content of these components is great, chemical durability or hydrolytic resistance decreases.

In the invention, various components can be added, in addition to the components described above.

MgO has an effect of improving chemical durability. In addition, MgO has an effect of causing high-temperature viscosity of glass to be lowered. The content of MgO is preferably 0% to 5%, 0% to 4.0%, 0% to 2.0%, 0% to 1.0%, or equal to or greater than 0% and smaller than 1%, and particularly preferably 0% to 0.5%. In a case where the content of MgO is excessively great, hydrolytic resistance decreases.

CaO has an effect of causing high-temperature viscosity of glass to be lowered. The content of CaO is preferably 0% to 5%, 0% to 4.0%, 0% to 1.5%, 0% to 1.1%, equal to or greater than 0% and smaller than 1%, or 0% to 0.9% and particularly preferably 0% to 0.5%. In a case where the content of CaO is excessively great, hydrolytic resistance decreases.

SrO has an effect of improving chemical durability. The content of SrO is preferably 0% to 5%, 0% to 4.0%, equal to or greater than 0% and smaller than 4%, or 0% to 2.0%, and particularly preferably 0% to 1.0%. In a case where the content of SrO is excessively great, hydrolytic resistance decreases.

A total content of MgO, CaO, and SrO is preferably 0% to 5%, 0% to 4.0%, 0% to 3.0%, 0% to 2.0%, or equal to or greater than 0% and smaller than 1.0%, and particularly preferably 0% to 0.5%. In a case where the total content of these components is excessively great, high-temperature viscosity of glass can be lowered; however, hydrolytic resistance decreases.

A total content of MgO and CaO is preferably equal to or greater than 0% and smaller than 1% or 0% to 0.8%, and particularly preferably 0% to 0.5%. The total content of these components is excessively great, hydrolysis characteristic decreases.

$TiO_2$ has an effect of improving hydrolytic resistance. The content of $TiO_2$ is preferably equal to or greater than 0% and smaller than 7.0%, more preferably 0% to 5.0% or 0% to 4.0%, and particularly preferably 0% to 1.5%. In a case where the content of $TiO_2$ is excessively great, a working temperature increases and quantity of heat required at the time of converting process into a pharmaceutical container increases. In addition, an amount of $B_2O_3$ or $Na_2O$ evaporated at the time of converting process into a pharmaceutical container increases.

$ZrO_2$ has an effect of improving hydrolytic resistance. The content of $ZrO_2$ is preferably equal to or greater than 0% and smaller than 7.0%, more preferably 0% to 5.0% or 0% to 4.0%, and particularly preferably 0% to 1.5%. In a case where the content of $ZrO_2$ is excessively great, a working temperature increases and quantity of heat required at the time of converting process into a pharmaceutical container increases. In addition, an amount of $B_2O_3$ or $Na_2O$ evaporated at the time of converting process into a pharmaceutical container increases.

$Fe_2O_3$ may cause coloring of glass to decrease transmittance in a visible range, and therefore, the content thereof is desirably equal to or smaller than 0.2%, equal to or smaller than 0.1%, and particularly desirably limited to be equal to or smaller than 0.02%.

One or more kinds of F, Cl, $Sb_2O_3$, $SnO_2$, $Na_2SO_4$ and the like may be included as fining agents. The total content of these fining agents is equal to or smaller than 3%, preferably equal to or smaller than 1%, and more preferably equal to or smaller than 0.5%. Cl or $SnO_2$ is preferably used in these fining agents, because the degree of effect on the melting temperature or the environment is small. In a case of using Cl, the content thereof is preferably equal to or smaller than 3%, more preferably equal to or smaller than 1%, and particularly preferably equal to or smaller than 0.2%. In a case of using $SnO_2$, the content thereof is preferably equal to or smaller than 2%, and more preferably equal to or smaller than 0.5%.

In addition, in the invention, in order to obtain glass having a low viscosity and high hydrolytic resistance, a value of $(MgO + CaO + SrO)/(Na_2O + K_2O + Li_2O)$ is adjusted to preferably equal to or smaller than 0.10, equal to or smaller than 0.08, or equal to or smaller than 0.07, and particularly preferably smaller than 0.07% in terms of mass ratio. In a case where this value is excessively great, hydrolytic resistance decreases. For the same reason, a value of $CaO/(Na_2O + K_2O + Li_2O)$ is adjusted to preferably equal to or smaller than 0.10, more preferably equal to or smaller than 0.08, particularly preferably equal to or smaller than 0.07, and still more preferably smaller than 0.07 in terms of mass ratio. In a case where this value is excessively great, hydrolytic resistance decreases.

In the invention, it is desired to balance contents of $Al_2O_3$ which is a component causing hydrolytic resistance to improve but viscosity of glass to increase and $Na_2O$, $K_2O$, $Li_2O$, MgO, CaO, SrO, and $B_2O_3$ which are components causing the viscosity of a glass to decrease but hydrolytic resistance to decrease in a viewpoint of making hydrolytic resistance compatible with excellent processability. Specifically, $Al_2O_3/(Na_2O + K_2O + Li_2O + MgO + CaO + SrO + B_2O_3)$ is preferably equal to or greater than 0.32, equal to or greater than 0.34, equal to or greater than 0.35, or equal to or greater than 0.36, and particularly preferably equal to or greater than 0.37 in terms of mass ratio. In addition, it is desired that a value thereof is equal to or smaller than 0.60, particularly equal to or smaller than 0.50. "$Al_2O_3/(Na_2O + K_2O + Li_2O + MgO + CaO + SrO + B_2O_3)$" is a value obtained by dividing the content of $Al_2O_3$ by a total content of $Na_2O$, $K_2O$, $Li_2O$, MgO, CaO, SrO, and $B_2O_3$. In a case where the value of $Al_2O_3/(Na_2O + K_2O + Li_2O + MgO + CaO + SrO + B_2O_3)$ is excessively small, hydrolytic resistance of glass decreases. In addition, the amount of $B_2O_3$ or an alkali metal oxide component evaporated from the glass at the time of performing the converting with a burner increases. In a case where the value of $Al_2O_3/(Na_2O + K_2O + Li_2O + MgO + CaO + SrO + B_2O_3)$ is excessively great, viscosity of glass increases, a converting temperature in a case of manufacturing a glass container such as an ampule or a vial from a glass tube increases, and the amount of $B_2O_3$ or $Na_2O$ in the glass evaporated at the time of performing heating with a burner increases.

Moreover, it is desired that $Al_2O_3/(Na_2O + K_2O + Li_2O)$ is 0.7 to 1.5 or 0.75 to 1.5, and particularly 0.75 to 1.2 in terms of mass ratio. In a case where the ratio thereof is excessively small, hydrolytic resistance decreases. In a case where the ratio thereof is excessively great, a working temperature increases and quantity of heat required at the time of converting process into a pharmaceutical container increases.

In the invention, a value of $(Na_2O + K_2O + Li_2O - Al_2O_3)/B_2O_3$ is preferably equal to or smaller than 0.39, equal to or smaller than 0.37, or smaller than 0.36 in terms of a molar ratio. In addition, it is desired that the value thereof is 0.315 to 0.350, 0.320 to 0.345, 0.320 to 0.340, or equal to or greater than 0.325 and smaller than 0.340, and particularly equal to or greater than 0.33 and smaller than 0.340. In a case where the value thereof is excessively great, since a content of alkali metal oxides such as $Na_2O$, $K_2O$, and $Li_2O$ is great, an amount of these evaporated due to various thermal treatments at the time of converting increases. Or, since a content of $B_2O_3$ is small, a working temperature increases, and thus the alkali metal oxides such as $Na_2O$, $K_2O$, and $Li_2O$ are easily evaporated due to various thermal treatments at the time of converting, and chemical durability or hydrolytic resistance decreases. In addition, bubbles are easily generated in accordance with vaporization of water. On the other hand, in a case where the value thereof is excessively small, since a content of alkali metal oxides such as $Na_2O$, $K_2O$, and $Li_2O$ is small, a working temperature increases. $Na_2O$, $K_2O$, $Li_2O$, or $B_2O_3$ is easily evaporated due to various thermal treatments at the time of converting and bubbles are easily generated in accordance with vaporization of water while chemical durability or hydrolytic resistance decreases. Or, a content of $B_2O_3$ is great, and thus chemical durability or hydrolytic resistance decreases at the time before converting process to a container. "$Na_2O + K_2O + Li_2O - Al_2O_3$" is a value obtained by subtracting a content of $Al_2O_3$ from the total content of $Na_2O$, $K_2O$, and $Li_2O$. The expression of "$(Na_2O + K_2O + Li_2O - Al_2O_3)/B_2O_3$" indicates a value obtained by dividing the value of $(Na_2O + K_2O + Li_2O - Al_2O_3)$ by a content of $B_2O_3$.

The borosilicate glass for a pharmaceutical container according to the invention preferably has the following characteristics.

In a glass grains test of a hydrolytic resistance test based on EP 8.0, the consumption of 0.02 mol/L hydrochloric acid per unit glass mass is preferably equal to or smaller than 0.030 mL, equal to or smaller than 0.028 mL, or equal to or smaller than 0.026 mL, and particularly preferably equal to or smaller than 0.025 mL. In a case where the consumption of hydrochloric acid is excessively great, the amount of glass components, particularly alkali metal components extracted may significantly increase to cause alteration of aqueous-based medicament components, at the time of manufacturing a pharmaceutical container such as an ampule or a vial, filling the pharmaceutical container with an aqueous-based medicament, and storing the aqueous-based medicament.

In an acid resistance test based on DIN12116, a weight loss per unit area is preferably equal to or smaller than 1.0 mg/dm$^2$ and particularly preferably equal to or smaller than 0.8 mg/dm$^2$. In a case where a weight loss is excessively great, the amount of glass components extracted may significantly increase to cause alteration of aqueous-based medicament components, at the time of manufacturing a pharmaceutical container such as an ampule or a vial, filling the pharmaceutical container with an aqueous-based medicament, and storing the aqueous-based medicament.

The working temperature is equal to or lower than 1250°C, 1150°C to 1250°C, more preferably 1150°C to 1240°C, and particularly preferably 1160°C to 1230°C. In a case where the working temperature is excessively high, a converting temperature in a case of manufacturing a glass container such as an ampule or a vial from a glass tube increases, and the amount of $B_2O_3$ or alkali metal oxides in the glass evaporated significantly increases.

The liquidus viscosity is preferably equal to or greater than $10^{4.5}$ dPa·s, equal to or greater than $10^{5.0}$ dPa·s, equal to or greater than $10^{5.2}$ dPa·s, equal to or greater than $10^{5.4}$ dPa·s, and particularly preferably equal to or greater than $10^{5.6}$ dPa·s. In a case where the liquidus viscosity decreases, devitrification easily occurs at the time of glass tube forming using a Danner method, and productivity decreases.

A coefficient of linear thermal expansion is an important parameter for thermal shock resistance of glass. In order for the glass to have sufficient thermal shock resistance, the coefficient of linear thermal expansion in a temperature range of 30°C to 380°C is preferably equal to or smaller than $58 \times 10^{-7}$/°C or 45 to $58 \times 10^{-7}$/°C, and particularly preferably 48 to $55 \times 10^{-7}$/°C.

Next, a glass tube for a pharmaceutical container according to the invention will be described.

The glass tube for a pharmaceutical container according to the invention is preferable to have a compositions or characteristics described above.

In addition, in the glass tube for a pharmaceutical container according to the invention, a bend of a tube is preferably equal to or smaller than 6.0 mm or equal to or smaller than 5.0 mm, and particularly preferably equal to or smaller than 4.0 mm. In a case where the value thereof is excessively great, when a glass tube is caused to rotate at the time of converting process to a container, a position of the glass tube is not stable and unevenness in heating by flame of a burner occurs. Until a temperature of a potion that is difficult to be heated increases to a predetermined temperature, a portion that is easily heated is maintained in a state of high temperature and an amount of $B_2O_3$ or $Na_2O$ evaporated increases. In addition, a time for forming one container also becomes long, and an efficiency of converting process to a container is remarkably degraded.

In addition, a thickness deviation of a glass tube is preferably equal to or smaller than 15% or equal to or smaller than 13%, and particularly preferably equal to or smaller than 10%. In a case where a value thereof is excessively great, difference in heat capacity of each portion of the glass tube becomes great, and a temperature of the glass tube does not evenly increase with a burner at the time of converting process to a container. Until a temperature of a portion of which a thickness is large and the heat capacity is large increases to a predetermined temperature, a portion of which a thickness is small and the heat capacity is small is maintained in a state of high temperature and an amount of $B_2O_3$ or $Na_2O$ evaporated increases. In addition, a time for forming one container also becomes long, and an efficiency of converting process to a container is remarkably degraded.

In addition, in the glass tube for a pharmaceutical container according to the invention, a value of (atomic concentration of Na)/(atomic concentration of Na + atomic concentration of Si) within a region from an inner surface of the glass tube to a depth of 200 nm is preferably equal to or greater than 0.01 and smaller than 0.5 or equal to or greater than 0.01 and smaller than 0.4, and particularly preferably equal to or greater than 0.01 and smaller than 0.3. In a case where a value of (atomic concentration of Na)/(atomic concentration of Na + atomic concentration of Si) in a region from a surface of glass to a depth of 200 nm is excessively great, an amount of $B_2O_3$ or an alkali metal oxide component evaporated from glass at the time of performing heating with a burner increases. On the other hand, a value of (atomic concentration of Na)/(atomic concentration of Na + atomic concentration of Si) in a region from a surface of glass to a depth of 200 nm is excessively small, flakes become easily generated. A value of (atomic concentration of Na)/(atomic concentration of Na + atomic concentration of Si) in a region from a surface of glass to a depth of 200 nm can be controlled by appropriately selecting a forming condition of a glass tube or a kind of a refractory contacting to glass. In addition, an atomic concentration of Na and an atomic concentration of Si can be quantified using, for example, an X-ray photoelectron spectroscopy (ESCA).

In a case where a value of (atomic concentration of Na)/(atomic concentration of Na + atomic concentration of Si) of an inner surface of a glass tube is set as X1, and a value of (atomic concentration of Na)/(atomic concentration of Na + atomic concentration of Si) in a region at a depth of 200 nm from the inner surface of a glass tube is set as X2, an absolute value of (X1 - X2) is preferably 0.1 to 0.3. In a case where a value thereof is not within the range described above, flakes become easily generated.

A composition, appropriate ranges of characteristics, reason for limitation, and the like of borosilicate glass configuring the glass tube for a pharmaceutical container according to the invention are as described above, and here, descriptions thereof are omitted.

Next, a method for manufacturing a glass tube for a pharmaceutical container according to the invention will be described. In the following description, a Danner method is used as an example.

First, a glass batch is prepared by mixing glass raw materials with each other, so as to have the glass composition described above. Next, the glass batch is continuously put into a melting furnace at 1550°C to 1700°C, to be melted and clarified. Then, the obtained molten glass is drawn out in a tubular shape from a tip end portion of a rotating refractory, while winding the molten glass around the rotating refractory and blowing air from the tip end portion. Then, the drawn tubular glass is cut to have a predetermined length and a glass tube for a pharmaceutical container is obtained. The glass tube obtained as described above is supplied for the manufacturing of a vial or an ampule.

An adjustment of a water content (β-OH value) in glass may be performed by using hydrous raw materials or adjusting a melting temperature or glass flow rate. An adjustment of a bend or a thickness deviation of a glass tube may be performed by adjusting a temperature distribution in a muffle furnace, the rotation speed of a sleeve and the like. A content of $Na_2O$ in the vicinity of an inner surface of the obtained glass tube (and a glass container) can be reduced by selecting a material in which a content of $Na_2O$ is small or a material (including coating a surface of refractory with platinum and the like) in which $Na_2O$ component is difficult to be extracted from the surface, as refractory to be used. In the invention, a glass tube having desired characteristics can be obtained by appropriately selecting or combining these means.

In addition, the glass tube for a pharmaceutical container according to the invention is not limited to be manufactured by the Danner method, and may be manufactured by using an arbitrary method which is well known in the related art. For example, a bellow method or a down-draw method is also an effective method as the manufacturing method of the glass tube for a pharmaceutical container according to the invention.

Examples

Hereinafter, the invention will be described with reference to examples.

(Example 1)

Tables 1 and 2 show samples (Sample Nos. 1 to 16). In the tables, "$\Sigma R_2O$" indicates "$K_2O + Na_2O + Li_2O$" and "$\Sigma RO$" indicates "$MgO + CaO + SrO$".

[Table 1]

| | 1 | 2 | 3 | 4 | 5 | 6 | 7 | 8 |
|---|---|---|---|---|---|---|---|---|
| $SiO_2$ | 73.6 | 74.0 | 72.8 | 72.8 | 70.5 | 73.5 | 73.4 | 74.7 |
| $Al_2O_3$ | 7.0 | 6.6 | 7.4 | 7.6 | 6.5 | 7.1 | 6.5 | 6.5 |
| $B_2O_3$ | 10.1 | 10.3 | 11.4 | 11.4 | 10.8 | 10.6 | 11.2 | 10.3 |
| $MgO$ | 0.0 | 0.0 | 0.0 | 0.0 | 0.0 | 0.0 | 0.0 | 0.0 |
| $CaO$ | 0.3 | 0.0 | 0.5 | 0.6 | 0.0 | 0.3 | 0.5 | 0.1 |
| $BaO$ | 0.0 | 0.0 | 0.0 | 0.0 | 0.0 | 0.0 | 0.0 | 0.0 |
| $Na_2O$ | 6.1 | 6.1 | 5.7 | 5.5 | 6.0 | 6.0 | 4.1 | 5.9 |
| $K_2O$ | 2.2 | 2.2 | 1.8 | 1.8 | 2.2 | 2.2 | 3.9 | 2.2 |
| $F$ | 0.00 | 0.00 | 0.00 | 0.00 | 0.00 | 0.00 | 0.00 | 0.00 |
| $Cl$ | 0.06 | 0.07 | 0.05 | 0.06 | 0.07 | 0.00 | 0.00 | 0.05 |
| $TiO_2$ | 0.0 | 0.0 | 0.0 | 0.0 | 0.0 | 0.0 | 0.0 | 0.0 |
| $ZrO_2$ | 0.0 | 0.0 | 0.0 | 0.0 | 3.5 | 0.0 | 0.0 | 0.0 |
| $SnO_2$ | 0.0 | 0.2 | 0.0 | 0.0 | 0.0 | 0.2 | 0.3 | 0.1 |
| $Fe_2O_3$ | 0.015 | 0.014 | 0.006 | 0.006 | 0.006 | 0.015 | 0.010 | 0.015 |
| $MgO + CaO$ | 0.3 | 0.0 | 0.5 | 0.6 | 0.0 | 0.3 | 0.5 | 0.1 |
| $\Sigma R_2O$ | 8.4 | 8.3 | 7.5 | 7.3 | 8.2 | 8.2 | 8.0 | 8.1 |
| $\Sigma RO$ | 0.3 | 0.0 | 0.5 | 0.6 | 0.0 | 0.3 | 0.5 | 0.1 |
| $\Sigma RO/\Sigma R_2O$ | 0.04 | 0.00 | 0.07 | 0.08 | 0.00 | 0.04 | 0.06 | 0.01 |
| $CaO/\Sigma R_2O$ | 0.04 | 0.00 | 0.07 | 0.08 | 0.00 | 0.04 | 0.06 | 0.01 |
| $K_2O/Na_2O$ | 0.37 | 0.37 | 0.32 | 0.33 | 0.37 | 0.37 | 0.95 | 0.37 |
| $Al_2O_3/(B_2O_3 + \Sigma R_2O + \Sigma RO)$ | 0.37 | 0.35 | 0.38 | 0.39 | 0.34 | 0.37 | 0.33 | 0.35 |
| $Al_2O_3/\Sigma R_2O$ | 0.84 | 0.79 | 0.99 | 1.04 | 0.79 | 0.86 | 0.81 | 0.80 |
| $(Na_2O + K_2O - Al_2O_3)/B_2O_3$ (mol%) | 0.370 | 0.388 | 0.235 | 0.203 | 0.364 | 0.335 | 0.272 | 0.369 |
| Coefficient of thermal expansion ($\times 10^{-7}$/°C) | 53.9 | 52.7 | 51.0 | 51.1 | 53.1 | 53.6 | 50.5 | 52.0 |
| Strain point (°C) | 524 | 523 | 519 | 517 | 531 | 522 | 513 | 523 |
| Annealing point (°C) | 570 | 570 | 565 | 563 | 578 | 568 | 561 | 569 |
| Softening point (°C) | 794 | 797 | 797 | 796 | 811 | 795 | 801 | 797 |
| Working temperature (°C) | 1186 | 1191 | 1211 | 1217 | 1215 | 1187 | 1205 | 1202 |

(continued)

| | 1 | 2 | 3 | 4 | 5 | 6 | 7 | 8 |
|---|---|---|---|---|---|---|---|---|
| Liquidus temperature (°C) | 942 | 1026 | 893 | Unmeasured | Unmeasured | 940 | Unmeasured | 966 |
| Liquidus viscosity (dPa·s) | $10^{5.8}$ | $10^{5.1}$ | $10^{6.4}$ | Unmeasured | Unmeasured | $10^{5.8}$ | Unmeasured | $10^{5.6}$ |
| Hydrolytic resistance (mL) | 0.024 | 0.019 | 0.023 | 0.025 | 0.017 | 0.022 | 0.022 | 0.024 |
| Acid resistance (mg/dm$^2$) | 0.6 | 0.5 | Unmeasured | Unmeasured | 0.6 | 0.6 | Unmeasured | Unmeasured |
| Sn extraction amount (mg/L) | - | Not detected | - | - | - | Not detected | Not detected | Not detected |
| $\beta$-OH value (/mm) | 0.50 | 0.53 | 0.46 | 0.65 | 0.69 | 0.55 | 0.45 | 0.72 |
| Processability | ○ | ○ | ○ | ○ | ○ | ○ | ○ | ○ |

[Table 2]

| | 9 | 10 | 11 | 12 | 13 | 14 | 15 | 16 |
|---|---|---|---|---|---|---|---|---|
| SiO2 | 73.4 | 74.1 | 73.5 | 73.7 | 73.4 | 73.6 | 73.5 | 73.5 |
| Al2O3 | 7.1 | 6.6 | 6.6 | 6.5 | 6.5 | 7.0 | 6.8 | 6.8 |
| B2O3 | 10.4 | 10.0 | 10.3 | 10.2 | 10.3 | 10.1 | 10.1 | 10.1 |
| MgO | 0.0 | 0.0 | 0.0 | 0.0 | 0.0 | 0.0 | 0.0 | 0.0 |
| CaO | 0.5 | 0.0 | 0.0 | 0.5 | 0.5 | 0.3 | 0.3 | 0.3 |
| BaO | 0.0 | 0.0 | 0.0 | 0.0 | 0.0 | 0.0 | 0.0 | 0.0 |
| Na2O | 6.0 | 5.8 | 6.0 | 6.4 | 6.1 | 6.1 | 6.1 | 6.1 |
| K2O | 2.2 | 2.2 | 2.2 | 2.2 | 2.5 | 2.2 | 2.2 | 2.2 |
| F | 0.00 | 0.00 | 0.00 | 0.00 | 0.00 | 0.00 | 0.00 | 0.00 |
| Cl | 0.07 | 0.00 | 0.00 | 0.07 | 0.07 | 0.00 | 0.00 | 0.00 |
| TiO2 | 0.0 | 0.9 | 0.5 | 0.0 | 0.0 | 0.0 | 0.0 | 0.0 |
| ZrO2 | 0.0 | 0.0 | 0.4 | 0.0 | 0.0 | 0.0 | 0.4 | 0.4 |
| SnO2 | 0.1 | 0.3 | 0.5 | 0.1 | 0.1 | 0.5 | 0.5 | 0.5 |
| Fe2O3 | 0.010 | 0.010 | 0.015 | 0.015 | 0.015 | 0.015 | 0.010 | 0.010 |
| MgO + CaO | 0.5 | 0.0 | 0.0 | 0.5 | 0.5 | 0.3 | 0.3 | 0.3 |
| $\Sigma$R2O | 8.2 | 8.0 | 8.2 | 8.5 | 8.6 | 8.4 | 8.3 | 8.3 |
| $\Sigma$RO | 0.5 | 0.0 | 0.0 | 0.5 | 0.5 | 0.3 | 0.3 | 0.3 |
| $\Sigma$RO/$\Sigma$R$_2$O | 0.06 | 0.00 | 0.00 | 0.06 | 0.06 | 0.04 | 0.04 | 0.04 |
| CaO/$\Sigma$R2O | 0.06 | 0.00 | 0.00 | 0.06 | 0.06 | 0.04 | 0.04 | 0.04 |
| K2O/Na2O | 0.38 | 0.37 | 0.37 | 0.34 | 0.41 | 0.37 | 0.36 | 0.36 |
| Al2O3/ (B2O3 + $\Sigma$R2O + $\Sigma$RO) | 0.37 | 0.37 | 0.36 | 0.34 | 0.34 | 0.37 | 0.37 | 0.37 |
| Al2O3/$\Sigma$R2O | 0.86 | 0.82 | 0.80 | 0.76 | 0.76 | 0.84 | 0.82 | 0.82 |
| (Na2O + K2O-Al2O3) /B2O3 (mol%) | 0.338 | 0.364 | 0.374 | 0.423 | 0.413 | 0.370 | 0.375 | 0.375 |
| Coefficient of thermal expansion ($\times$ $10^{-7}$/°C) | 53.5 | 52.8 | 53.0 | 55.2 | 55.1 | 53.9 | 53.6 | 53.6 |
| Strain point (°C) | 525 | 514 | 518 | 529 | 529 | 524 | 524 | 524 |
| Annealing point (°C) | 570 | 561 | 565 | 573 | 573 | 570 | 570 | 570 |
| Softening point (°C) | 793.5 | 789 | 794.5 | 788 | 791 | 794 | 794 | 794 |
| Working temperature (°C) | 1197 | 1190 | 1192 | 1168 | 1172 | 1186 | 1190 | 1190 |

EP 3 345 876 A1

(continued)

| | 9 | 10 | 11 | 12 | 13 | 14 | 15 | 16 |
|---|---|---|---|---|---|---|---|---|
| Liquidus temperature (°C) | 988 | 939 | Unmeasured | 1005 | 1013 | 942 | 981 | 981 |
| Liquidus viscosity (dPa·s) | $10^{5.4}$ | $10^{5.8}$ | Unmeasured | $10^{5.1}$ | $10^{5.1}$ | $10^{5.8}$ | $10^{5.4}$ | $10^{5.4}$ |
| Hydrolytic resistance (mL) | 0.023 | 0.019 | 0.020 | 0.025 | 0.025 | 0.024 | 0.026 | 0.026 |
| Acid resistance (mg/dm$^2$) | 0.7 | Unmeasured | Unmeasured | Unmeasured | Unmeasured | 0.5 | Unmeasured | Unmeasured |
| Sn extraction amount (mg/L) | Not detected | Not detected | Not detected | Not detected | Not detected | Not detected | Not detected | Not detected |
| β-OH value (/mm) | 0.46 | 0.62 | 0.56 | 0.58 | 0.52 | 0.58 | 0.45 | 0.28 |
| Processability | ○ | ○ | ○ | ○ | ○ | ○ | ○ | × |

Each sample was prepared as described below.

First, 500 g of a glass batch was mixed so as to have the composition shown in the table, and melted by using a platinum crucible at 1650°C for 4 hours. Stirring was performed twice during melting, in order to remove bubbles in the melt. After melting, an ingot was prepared, converted to have a shape necessary for measurement, and supplied for various evaluations. The β-OH value of glass was adjusted by combining with hydrous raw materials or controlling melting atmosphere.

As shown in Tables 1 and 2, Sample Nos. 1 to 15 showed excellent chemical durability and hydrolytic resistance. In addition, it was found that every sample had a working temperature of equal to or lower than 1220°C. Regarding Sample Nos. 2 and 6 to 15 including Sn in the glass composition, in a case where extraction of Sn was evaluated by a hydrolytic resistance test, the amount of extraction of Sn was smaller than a lower detection limit in any case of the samples. In addition, regarding Sample Nos. 1 to 15, the β-OH value was in a predetermined range, and it was possible to efficiently heat glass at the time of converting process to a container with a burner. Therefore, it is considered that an amount of $B_2O_3$ or $Na_2O$ evaporated does not increase in spite of not including BaO. On the other hand, regarding Sample No. 16, the β-OH value was small, and it was not possible to heat glass efficiently at the time of converting process to a container with a burner. Therefore, since quantity of heat more than the needed is required at the time of converting a glass tube, an amount of $B_2O_3$ or $Na_2O$ evaporated may increase.

The measurement of the coefficient of linear thermal expansion was performed by using glass samples formed in a rod shape having a size of approximately 5 mmϕ × 50 mm by a dilatometer in a temperature range of 30°C to 380°C.

The measurement of a strain point, an annealing point, and a softening point was performed by a fiber elongation method.

Regarding the working temperature, a viscosity curve of glass was obtained from high-temperature viscosity obtained by a platinum ball pulling method and a viscosity calculation formula of Fulcher, and a temperature corresponding to viscosity of $10^4$ dPa·s was obtained from the viscosity curve.

In the measurement of the liquidus temperature, a platinum boat having a size of approximately 120 × 20 × 10 mm was filled with a crushed glass sample and was put into an electric furnace having a linear temperature gradient for 24 hours. After that, a crystal precipitation portion was specified by microscope observation, a temperature corresponding to the crystal precipitation portion was calculated from a temperature gradient graph of the electric furnace, and this temperature was set as the liquidus temperature.

In the calculation of the liquidus viscosity, a viscosity curve of glass was obtained from a strain point, an annealing point, a softening point, a working temperature, and a viscosity calculation formula of Fulcher, the viscosity of the glass at the liquidus temperature was calculated form this viscosity curve, and this viscosity was set as the liquidus viscosity.

The hydrolytic resistance test was performed by a method of crushing a sample by using a mortar and a pestle made of alumina, based on a glass grains test of EP 8.0. The specific test procedure is as follows. A surface of a sample was carefully wiped with ethanol, the sample was crushed by using a mortar and a pestle made of alumina, and the sample was classified by using three stainless steel sieves respectively having an aperture of 710 μm, 425 μm, and 300 μm. The sample powder remaining on the sieves was crushed again and subjected to the same sieving operation. The sample powder remaining on the sieve having an aperture of 300 μm was washed with ethanol and put into a glass container such as a beaker. After that, an operation of adding and stirring ethanol, washing the sample by an ultrasonic washing machine for 1 minute, and drawing only a supernatant liquid was performed six times. Then, the sample was dried in an oven at 110°C for 30 minutes and cooled in a desiccator for 30 minutes. 10 g of the obtained sample powder was weighed with a precision of ± 0.0001 g by using an electronic balance, and was put in a 250 mL quartz flask, and 50 mL of extra pure water was added thereto. After sealing the flask tightly, the flask was put in an autoclave and stored at 121°C for 30 minutes. The temperature was increased from 100°C to 121°C at 1 °C/min and was decreased from 121°C to 100°C at 2 °C/min. After performing cooling to 95°C, the sample was extracted into a conical beaker. An operation of washing the inside of the flask with 30 mL of extra pure water and running the extra pure water into the conical beaker was performed three times. Approximately 0.05 mL of methyl red was added dropwise to a solution after the test, neutralization titration was performed with hydrochloric acid having a concentration of 0.02 mol/L, the consumption of hydrochloric acid was recorded, and the consumption of hydrochloric acid per 1 g of the sample glass was calculated. As this value is small, hydrolytic resistance is high.

The acid resistance test was performed by setting a sample surface area as 50 $cm^2$, and a liquid amount of hydrochloric acid having a concentration of 6 mol/L which is an eluate as 800 mL, based on DIN12116. The specific test procedure is as follows. First, a glass sample piece including surfaces, all of which are obtained by mirror polishing finish and having a total surface area of 50 $cm^2$ was prepared, and the sample was dipped in a solution obtained by mixing hydrofluoric acid (40 mass%) and hydrochloric acid (2 mol/L) so as to have a volume ratio of 1:9, as pretreatment, and stirred with a magnetic stirrer for 10 minutes. Next, the sample piece was extracted, ultrasonic cleaning for 2 minutes was performed with extra pure water three times, and then, ultrasonic cleaning was performed in ethanol for 1 minute twice. Then, the sample piece was dried in an oven at 110°C for 1 hour and cooled in a desiccator for 30 minutes. A

mass $m_1$ of the sample piece obtained as described above was measured with a precision of $\pm$ 0.1 mg, and recorded. Then, 800 mL of hydrochloric acid having a concentration of 6 mol/L was put in a beaker made of quartz glass, and heated until the boiling occurs by using an electric heater, and the sample piece hung with a platinum line was put in the beaker and stored for 6 hours. In order to prevent a decrease in the liquid amount during the test, an opening of a cover of a container was plugged up with a gasket and a cooling tube. After that, the sample piece was extracted, ultrasonic cleaning for 2 minutes was performed with extra pure water three times, and then, ultrasonic cleaning was performed in ethanol for 1 minute twice. The washed sample piece was dried in an oven at 110°C for 1 hour and cooled in a desiccator for 30 minutes. A mass piece $m_2$ of the sample treated as described above was measured with a precision of $\pm$ 0.1 mg, and recorded. Finally, a weight loss per unit area was calculated from the masses $m_1$ and $m_2$ mg of the sample before and after putting the sample into boiling hydrochloric acid and the total surface area A$cm^2$ of the sample by the following Expression 2, and was set as a measurement value of the acid resistance test.

[Expression 2]

$$\text{Amount of mass decrease per unit area} = 100 \times (m_1 - m_2)/2 \times A$$

The amount of extraction of Sn was analyzed regarding a test solution after the hydrolytic resistance test by using an ICP emission spectrometry device (manufactured by Varian). The specific test procedure is as described below. The sample solution after the hydrolytic resistance test was filtered with a membrane filter and collected with a centrifuge tube. A standard solution of Sn (manufactured by Wako Pure Chemical Industries, Ltd.) was diluted so that the content of Sn becomes 0 mg/L, 0.05 mg/L, 0.5 mg/L, and 1.0 mg/L, and standard solutions were prepared. A calibration curve was created from these standard solutions and the amount of extraction of Sn in the test solution was calculated. A measurement wavelength of Sn was 189.925 nm.

The water content in the glass was measured as the following procedure. 20 mm $\times$ 30 mm $\times$ 1 mm of plate glass was converted from the manufactured glass, and both surfaces thereof were subjected to mirror polishing and finishing. The water content in the plate glass was obtained as follows. Transmittance of glass was measured using FT-IR, and a β-OH value was calculated from the following Equation 1.

[Equation 1] $\quad$ β-OH value $= (1/t) \times \log 10 \, (T_1/T_2)$

t: Thickness (mm) of glass
$T_1$: Transmittance (%) in 3846 $cm^{-1}$ (2600 nm) of reference wavelength
$T_2$: Transmittance (%) in 3600 $cm^{-1}$ (2800 nm) of absorption wavelength due to hydroxyl group

An evaluation of processability of glass was performed as the following procedure. While rotating the manufactured tubular glass, a tube end was heated with an oxygen burner for a certain period of time and sealed by melting. After heating, the tube end sealed by melting was observed. A case where a shape thereof was good was indicated by "○" and a case where the shape thereof was not possible to be maintained was indicated by "×".

(Example 2)

Table 3 shows Sample Nos. 17 to 24.

[Table 3]

|  | 17 | 18 | 19 | 20 | 21 | 22 | 23 | 24 |
|---|---|---|---|---|---|---|---|---|
| SiO2 | 73.5 | 73.5 | 73.5 | 73.5 | 73.6 | 74.0 | 74.0 | 75.0 |
| Al2O3 | 7.1 | 7.1 | 7.1 | 7.1 | 7.0 | 6.6 | 6.6 | 5.4 |
| B2O3 | 10.6 | 10.6 | 10.6 | 10.6 | 10.1 | 10.3 | 10.3 | 10.5 |
| Li2O | 0.00 | 0.00 | 0.00 | 0.00 | 0.00 | 0.00 | 0.00 | 0.00 |
| Na2O | 6.0 | 6.0 | 6.0 | 6.0 | 6.1 | 6.1 | 6.1 | 6.8 |
| K2O | 2.2 | 2.2 | 2.2 | 2.2 | 2.2 | 2.2 | 2.2 | 0.1 |
| BaO | 0.0 | 0.0 | 0.0 | 0.0 | 0.0 | 0.0 | 0.0 | 0.0 |
| MgO | 0.0 | 0.0 | 0.0 | 0.0 | 0.0 | 0.0 | 0.0 | 0.0 |
| CaO | 0.3 | 0.3 | 0.3 | 0.3 | 0.3 | 0.0 | 0.0 | 1.3 |

(continued)

|  | 17 | 18 | 19 | 20 | 21 | 22 | 23 | 24 |
|---|---|---|---|---|---|---|---|---|
| F | 0.0 | 0.0 | 0.0 | 0.0 | 0.0 | 0.0 | 0.0 | 0.2 |
| Cl | 0.0 | 0.1 | 0.1 | 0.0 | 0.1 | 0.1 | 0.1 | 0.0 |
| TiO2 | 0.0 | 0.0 | 0.0 | 0.0 | 0.0 | 0.0 | 0.0 | 0.0 |
| ZrO2 | 0.0 | 0.0 | 0.0 | 0.0 | 0.0 | 0.0 | 0.0 | 0.0 |
| SnO2 | 0.2 | 0.2 | 0.0 | 0.2 | 0.0 | 0.0 | 0.0 | 0.0 |
| Fe2O3 | 0.02 | 0.02 | 0.02 | 0.02 | 0.02 | 0.01 | 0.01 | 0.02 |
| MgO + CaO | 0.3 | 0.3 | 0.3 | 0.3 | 0.3 | 0.0 | 0.0 | 1.3 |
| ∑R2O | 8.20 | 8.20 | 8.20 | 8.20 | 8.35 | 8.33 | 8.33 | 6.90 |
| ∑RO | 0.3 | 0.3 | 0.3 | 0.3 | 0.3 | 0.0 | 0.0 | 1.3 |
| ∑RO/∑R2O | 0.04 | 0.04 | 0.04 | 0.04 | 0.04 | 0.00 | 0.00 | 0.19 |
| CaO/∑R2O | 0.04 | 0.04 | 0.04 | 0.04 | 0.04 | 0.00 | 0.00 | 0.19 |
| K2O/Na2O | 0.37 | 0.37 | 0.37 | 0.37 | 0.37 | 0.37 | 0.37 | 0.01 |
| Al2O3/ (∑R2O + ∑RO + B2O3) | 0.37 | 0.37 | 0.37 | 0.37 | 0.37 | 0.35 | 0.35 | 0.29 |
| Al2O3/∑R2O | 0.87 | 0.87 | 0.87 | 0.87 | 0.84 | 0.79 | 0.79 | 0.78 |
| (∑R2O-Al2O3) /B2O3 (mol%) | 0.332 | 0.332 | 0.332 | 0.332 | 0.370 | 0.388 | 0.388 | 0.383 |
| Coefficient of thermal expansion ($\times 10^{-7}$/°C) | 53.6 | 53.6 | 53.6 | 53.6 | 53.9 | 52.7 | 52.7 | 49.0 |
| Strain point (°C) | 522 | 522 | 522 | 522 | 524 | 523 | 523 | 524 |
| Annealing point (°C) | 568 | 568 | 568 | 568 | 570 | 570 | 570 | 566 |
| Softening point (°C) | 795 | 795 | 795 | 795 | 794 | 797 | 797 | 780 |
| Working temperature (°C) | 1187 | 1187 | 1187 | 1187 | 1186 | 1191 | 1191 | 1161 |
| Liquidus temperature (°C) | 940 | 940 | 940 | 940 | 942 | 1026 | 1026 | 1030 |
| Liquidus viscosity (dPa·s) | $10^{5.8}$ | $10^{5.8}$ | $10^{5.8}$ | $10^{5.8}$ | $10^{5.8}$ | $10^{5.1}$ | $10^{5.1}$ | $10^{4.8}$ |
| Hydrolytic resistance (mL) | 0.022 | 0.022 | 0.022 | 0.022 | 0.024 | 0.019 | 0.019 | 0.035 |
| Acid resistance (mg/dm$^2$) | 0.6 | 0.6 | 0.6 | 0.6 | 0.6 | 0.5 | 0.5 | - |
| Sn extraction amount (mg/L) | Not detected | Not detected | - | Not detected | - | - | - | - |
| Bend (mm/1000 mm) | 3.0 | 2.3 | 3.8 | 3.2 | 4.0 | 3.5 | 8.0 | 9.2 |
| Thickness deviation (%) | 5 | 6 | 6 | 3 | 7 | 8 | 18 | 17 |
| β-OH (/mm) | 0.45 |  | 0.50 |  | 0.69 | 0.53 |  |  |

Each sample was prepared as described below.

First, a batch raw material that was mixed as compositions and characteristics shown in the table was continuously put into a melting furnace at 1550°C to 1700°C to be melted and clarified. Then, the obtained molten glass was supplied to Danner apparatus, and the glass was drawn out in a tubular shape such that an outer diameter is to be 20 mm and an inner diameter is to be 18 mm (target thickness of 1 mm). Further, the drawn tubular glass was cut to have length of 1500 mm and a glass tube for a pharmaceutical container was obtained. The Danner apparatus includes refractory sleeve provided in a muffle furnace and a tube drawer that draws out glass. The refractory sleeve is inclined obliquely downward and provided so as to rotate around the central axis of the sleeve. The refractory sleeve is made by winding the molten glass supplied onto the sleeve to a surface of the sleeve and guiding toward a tip end of the sleeve while rotating and inclining of the sleeve. An air blast hole is provided in the tip end of the sleeve. Air is supplied into glass drawn from the tip end of the sleeve so as to keep the glass to the tubular shape. The tube drawer includes a pair of facing rollers. The tube drawer stretches the tubular glass separated from the tip end of the sleeve to have a predetermined tube diameter by nipping the tubular glass with the rollers.

The glass tube samples obtained as described above were supplied for various evaluations. A bend or a thickness deviation of the glass tube was controlled by changing a temperature distribution in a muffle furnace, a rotation speed of a sleeve, or the like.

As shown in Table 3, Sample Nos. 17 to 22 showed excellent chemical durability and hydrolytic resistance. In addition, it was found that every sample had a working temperature of equal to or lower than 1220°C. Regarding Sample Nos. 17, 18, and 20 including Sn in the glass composition, in a case where extraction of Sn was evaluated by a hydrolytic resistance test, the amount of extraction of Sn was smaller than a lower detection limit in any case of the samples. In addition, regarding Sample Nos. 17 to 22, the bend and thickness deviation were in a predetermined range, and it was possible to efficiently heat the glass at the time of converting process to a container with a burner. Therefore, it is considered that an amount of $B_2O_3$ or $Na_2O$ evaporated does not increase in spite of not including BaO. On the other hand, regarding Sample Nos. 23 and 24, the bend was large, and it was not possible to efficiently heat the glass at the time of converting process to a container with a burner. Therefore, since quantity of heat more than the needed are required at the time of converting a glass tube, an amount of $B_2O_3$ or $Na_2O$ evaporated may increase.

The measurement of the bend of the glass tube was performed as the following procedure. On a flat plate, one end of the glass tube cut to 1000 mm was rotated while pressing, and the maximum value of height separated from the flat plate was measured.

The measurement of the thickness deviation of the glass tube was performed as the following procedure. The glass tube was cut to 50 mm, and the thickness of the glass tube was measured while rotating the glass tube. The thickness deviation was calculated using Equation 2.

$$[\text{Equation 2}]\ (\text{Maximum thickness} - \text{Minimum thickness})/\text{Target thickness} \times 100$$

The water content in the glass was measured as the following procedure. After dividing the manufactured glass tube in half, transmittance of the glass tube was measured using FT-IR, and a $\beta$-OP value was calculated from the following Equation 1.

$$[\text{Equation 1}]\quad \beta\text{-OH value} = (1/t) \times \log 10\ (T_1/T_2)$$

t: Thickness (mm) of glass tube
$T_1$: Transmittance (%) in 3846 $cm^{-1}$ (2600 nm) of reference wavelength
$T_2$: Transmittance (%) in 3600 $cm^{-1}$ (2800 nm) of absorption wavelength due to hydroxyl group

(Example 3)

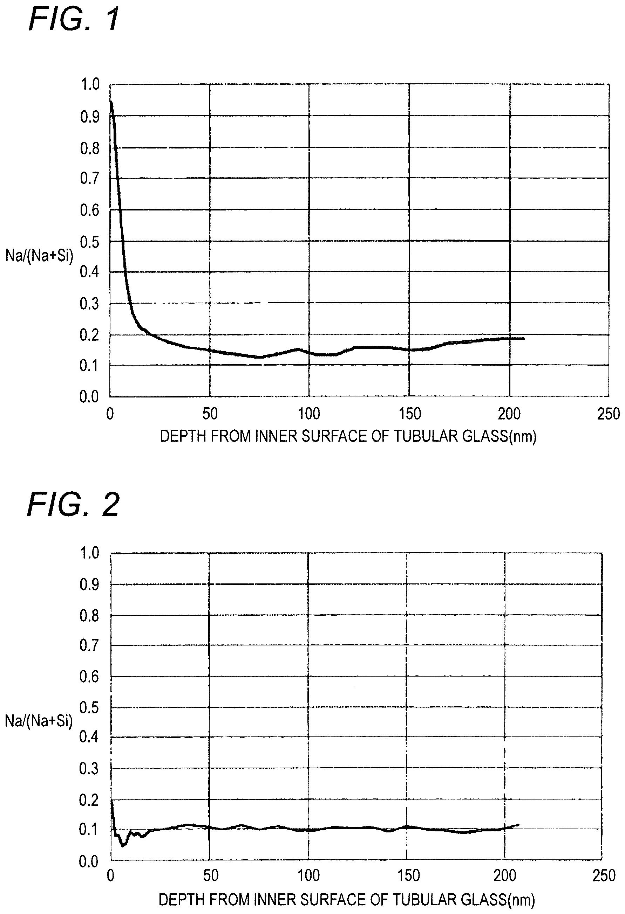

Table 1 shows Sample Nos. 25 to 32.
In addition, Figs 1 and 2 show analysis results of (atomic concentration of Na)/(atomic concentration of Na + atomic concentration of Si) within a region from a surface of glass to a depth of 200 nm. Fig. 1 shows an analysis result of Sample No. 32 and Fig. 2 shows an analysis result of Sample No. 25.

[Table 4]

|  | 25 | 26 | 27 | 28 | 29 | 30 | 31 | 32 |
|---|---|---|---|---|---|---|---|---|
| SiO2 | 73.5 | 73.5 | 73.5 | 73.5 | 73.6 | 74.0 | 74.0 | 75.0 |
| Al2O3 | 7.1 | 7.1 | 7.1 | 7.1 | 7.0 | 6.6 | 6.6 | 5.4 |
| B2O3 | 10.6 | 10.6 | 10.6 | 10.6 | 10.1 | 10.3 | 10.3 | 10.5 |

(continued)

| | 25 | 26 | 27 | 28 | 29 | 30 | 31 | 32 |
|---|---|---|---|---|---|---|---|---|
| Li2O | 0.0 | 0.0 | 0.0 | 0.0 | 0.0 | 0.0 | 0.0 | 0.0 |
| Na2O | 6.0 | 6.0 | 6.0 | 6.0 | 6.1 | 6.1 | 6.1 | 6.8 |
| K2O | 2.2 | 2.2 | 2.2 | 2.2 | 2.2 | 2.2 | 2.2 | 0.1 |
| BaO | 0.0 | 0.0 | 0.0 | 0.0 | 0.0 | 0.0 | 0.0 | 0.0 |
| MgO | 0.0 | 0.0 | 0.0 | 0.0 | 0.0 | 0.0 | 0.0 | 0.0 |
| CaO | 0.3 | 0.3 | 0.3 | 0.3 | 0.3 | 0.0 | 0.0 | 1.3 |
| F | 0.0 | 0.0 | 0.0 | 0.0 | 0.0 | 0.0 | 0.0 | 0.2 |
| Cl | 0.0 | 0.1 | 0.1 | 0.0 | 0.1 | 0.1 | 0.1 | 0.0 |
| TiO2 | 0.0 | 0.0 | 0.0 | 0.0 | 0.0 | 0.0 | 0.0 | 0.0 |
| ZrO2 | 0.0 | 0.0 | 0.0 | 0.0 | 0.0 | 0.0 | 0.0 | 0.0 |
| SnO2 | 0.2 | 0.2 | 0.0 | 0.2 | 0.0 | 0.0 | 0.0 | 0.0 |
| Fe2O3 | 0.02 | 0.02 | 0.02 | 0.02 | 0.02 | 0.01 | 0.01 | 0.02 |
| MgO + CaO | 0.3 | 0.3 | 0.3 | 0.3 | 0.3 | 0.0 | 0.0 | 1.3 |
| $\sum$R2O | 8.2 | 8.2 | 8.2 | 8.2 | 8.4 | 8.3 | 8.3 | 6.9 |
| $\sum$RO | 0.3 | 0.3 | 0.3 | 0.3 | 0.3 | 0.0 | 0.0 | 1.3 |
| $\sum$RO/$\sum$R2O | 0.04 | 0.04 | 0.04 | 0.04 | 0.04 | 0.00 | 0.00 | 0.19 |
| CaO/$\sum$R2O | 0.04 | 0.04 | 0.04 | 0.04 | 0.04 | 0.00 | 0.00 | 0.19 |
| K2O/Na2O | 0.37 | 0.37 | 0.37 | 0.37 | 0.37 | 0.37 | 0.37 | 0.01 |
| Al2O3/ ($\sum$R2O + $\sum$RO + B2O3) | 0.37 | 0.37 | 0.37 | 0.37 | 0.37 | 0.35 | 0.35 | 0.29 |
| Al2O3/$\sum$R2O | 0.87 | 0.87 | 0.87 | 0.87 | 0.84 | 0.79 | 0.79 | 0.78 |
| ($\sum$R2O-Al2O3) /B2O3 (mol%) | 0.33 | 0.33 | 0.33 | 0.33 | 0.37 | 0.39 | 0.39 | 0.38 |
| Coefficient of thermal expansion ($\times 10^{-7}$/°C) | 53.6 | 53.6 | 53.6 | 53.6 | 53.9 | 52.7 | 52.7 | 49.0 |
| Strain point (°C) | 522 | 522 | 522 | 522 | 524 | 523 | 523 | 524 |
| Annealing point (°C) | 568 | 568 | 568 | 568 | 570 | 570 | 570 | 566 |
| Softening point (°C) | 795 | 795 | 795 | 795 | 794 | 797 | 797 | 780 |
| Working temperature (°C) | 1187 | 1187 | 1187 | 1187 | 1186 | 1191 | 1191 | 1161 |
| Liquidus temperature (°C) | 940 | 940 | 940 | 940 | 942 | 1026 | 1026 | 1030 |
| Liquidus viscosity (dPa·s) | $10^{5.8}$ | $10^{5.8}$ | $10^{5.8}$ | $10^{5.8}$ | $10^{5.8}$ | $10^{5.1}$ | $10^{5.1}$ | $10^{4.8}$ |
| Hydrolytic resistance (mL) | 0.022 | 0.022 | 0.022 | 0.022 | 0.024 | 0.019 | 0.019 | 0.035 |
| Acid resistance (mg/dm$^2$) | 0.6 | 0.6 | 0.6 | 0.6 | 0.6 | 0.5 | 0.5 | - |
| Sn extraction amount (mg/L) | Not detected | Not detected | - | Not detected | - | - | - | - |
| Na/(Na + Si) | 0.2 | 0.2 | 0.3 | 0.3 | 0.2 | 0.3 | 0.6 | 0.9 |
| \|X1 - X2\| | 0.1 | 0.1 | 0.2 | 0.3 | 0.1 | 0.2 | 0.8 | 0.8 |

(continued)

|  | 25 | 26 | 27 | 28 | 29 | 30 | 31 | 32 |
|---|---|---|---|---|---|---|---|---|
| Na ion extraction | ○ | ○ | ○ | ○ | ○ | ○ | × | × |
| β-OP (/mm) | 0.45 | | 0.50 | | 0.69 | 0.53 | | |

Each sample was prepared as described below.

First, a glass batch was prepared by mixing glass raw materials with each other, so as to have compositions and characteristics as shown in the table. Next, the glass batch was continuously put into a melting furnace at 1550°C to 1700°C, to be melted and clarified. Then, the obtained molten glass was supplied to Danner apparatus. The glass was drawn out in a tubular shape from a tip end portion of a rotating refractory (refractory sleeve), while winding the molten glass around the rotating refractory and blowing air from the tip end portion. Then, the drawn tubular glass was cut to have a predetermined length and a glass tube was obtained. The glass tube obtained as described above was supplied for various evaluations. Table 4 shows the results thereof. Figs 1 and 2 show a change amount of (atomic concentration of Na)/(atomic concentration of Na + atomic concentration of Si) of an inner surface of the glass tube of Sample Nos. 32 and 25.

The value of (atomic concentration of Na)/(atomic concentration of Na + atomic concentration of Si) of an inner surface of the glass tube was controlled by changing a kind of refractory used at the time of tube drawing and forming or a coating area of platinum film which was formed on a surface of refractory sleeve.

As shown in Table 4, Sample Nos. 25 to 30 showed excellent hydrolytic resistance and chemical durability. In addition, "Na/Na + Si" that indicates the maximum value of (atomic concentration of Na)/(atomic concentration of Na + atomic concentration of Si) within a region from a surface of glass to a depth of 200 nm and "|X1 - X2|" that indicates an absolute value of a difference of (atomic concentration of Na)/(atomic concentration of Na + atomic concentration of Si) between the inner surface of the glass tube and a region at a depth of 200 nm from the inner surface of the glass tube were equal to or smaller than 0.3. In addition, extraction of Na ions was not observed. On the other hand, Sample No. 31 has excellent hydrolytic resistance; however, an amount of extraction of Na ions from the inner surface of the glass tube is large and a change in pH was easily generated. In addition, Sample No. 32 has low hydrolytic resistance, and there was a concern that it was not possible to reduce an amount of $B_2O_3$ or $Na_2O$ evaporated during converting process to a container with a burner.

"Na/Na + Si" that indicates the maximum value of (atomic concentration of Na)/(atomic concentration of Na + atomic concentration of Si) within a region from a surface of glass to a depth of 200 nm and "|X1 - X2|" that indicates an absolute value of a difference of (atomic concentration of Na)/(atomic concentration of Na + atomic concentration of Si) between the inner surface of the glass tube and a region at a depth of 200 nm from the inner surface of the glass tube were analyzed as follows. The glass tube to be a sample was cut into a semicircular shape (divided into in half), and then a depth profile from the surface of the glass tube to a depth of 200 nm was prepared using an X-ray photoelectron spectroscopy. Analysis elements were Si and Na.

An evaluation of extraction of Na ions from the inner surface of the glass tube was performed as the following procedure.

The glass tube was cut to have a length of 5 to 10 mm, a simple container which was prepared by sealing one side with a rubber stopper was filled with water, and covered with aluminum foil. After that, an extraction test based on EP 8.0 was performed. Methyl red was dropped to eluate and water and color comparison was performed. In a case where the color of methyl red of the eluate changes, it is determined that the Na ions are extracted, the evaluation result was indicated by "×", and there was no change, it was determined that the Na ions are not extracted, the evaluation result was indicated by "○".

Next, hydrolytic resistance after various thermal treatments in converting process to a container processing will be described.

[Table 5]

|  | Thermal treatment not performed | 600°C-5h | 900°C-5h |
|---|---|---|---|
| No. 25 | 1.2 | 1.3 | 1.3 |
| No. 32 | 2.4 | 2.9 | 3.3 |

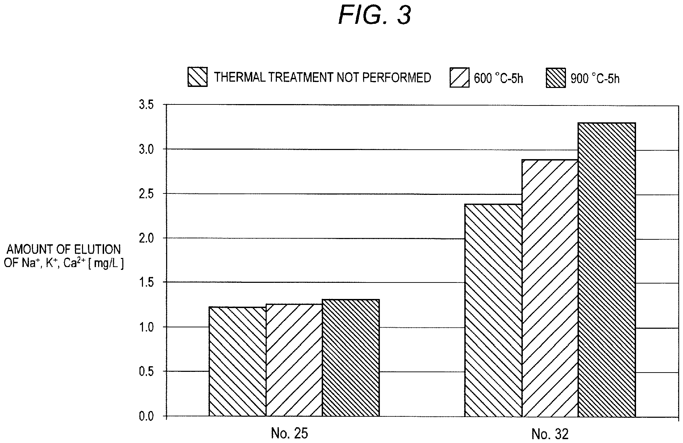

Using the glass tube of Sample Nos. 25 and 32 which were prepared as described above, each sample was subjected to thermal treatment in an electric furnace for five hours respectively at 600°C and 900°C. It is assumed that the temperatures of 600°C and 900°C are temperatures of thermal treatment after converting. For samples before and after the thermal treatment, the hydrolytic resistance test was carried out. An amount of extraction of Na ions, K ions, and Ca ions in the obtained eluate was measured. The smaller amount of extraction Na ions, K ions, and Ca ions, the higher the resistance to hydrolysis is meant. Table 2 shows a total amount of extraction of each ions. Fig. 3 shows an evaluation result for each thermal treatment. Regarding Sample No. 25, a value of $Al_2O_3/(Na_2O + K_2O + Li_2O + MgO + CaO + SrO + B_2O_3)$ was in a predetermined range. Therefore, a change in an amount of extraction of Na ions, K ions, and Ca ions in accordance with the thermal treatment was small. Excellent hydrolytic resistance was maintained. On the other hand, regarding Sample No. 32, a value of $Al_2O_3/(Na_2O + K_2O + Li_2O + MgO + CaO + SrO + B_2O_3)$ was out of a predetermined range. Therefore an amount of extraction of Na ions, K ions, and Ca ions increases along with the thermal treatment. Hydrolytic resistance decreased.

Industrial Applicability

The borosilicate glass (glass tube) for a pharmaceutical container according to the invention can be suitably used as a material for various pharmaceutical containers such as an ampule, a vial, a prefilled syringe, and a cartridge.

**Claims**

1. A borosilicate glass for a pharmaceutical container, comprising:

   $SiO_2$, $Al_2O_3$, $B_2O$, and $R_2O$ (R is one or more kinds selected from Li, Na, and K) as essential components, wherein BaO is not substantially included, and
   a water content in the glass is 0.30 to 0.80/mm in terms of β-OP value.

2. The borosilicate glass for a pharmaceutical container according to claim 1, comprising 70.0% to 75.5% of $SiO_2$, 6.3% to 11% of $Al_2O_3$, 3% to 11.5% of $B_2O_3$, 4.0% to 8.5% of $Na_2O$, 0% to 5% of $K_2O$, and 0% to 0.2% of $Li_2O$ in terms of mass%.

3. The borosilicate glass for a pharmaceutical container according to claim 1 or 2,
   wherein each content of MgO, CaO, and SrO is 0 to 4 mass%.

4. The borosilicate glass for a pharmaceutical container according to claims 1 to 3,
   wherein MgO + CaO + SrO is 0 to 4 mass%.

5. The borosilicate glass for a pharmaceutical container according to any one of claims 1 to 4,
   wherein MgO + CaO is equal to or greater than 0 and smaller than 1 mass%.

6. The borosilicate glass for a pharmaceutical container according to any one of claims 1 to 5,
   wherein $Na_2O + K_2O + Li_2O$ is 5 to 10 mass%.

7. The borosilicate glass for a pharmaceutical container according to any one of claims 1 to 6,
   wherein a content of $Fe_2O_3$ is equal to or greater than 0 and smaller than 0.2 mass%.

8. The borosilicate glass for a pharmaceutical container according to any one of claims 1 to 7,
   wherein a value of $(MgO + CaO + SrO)/(Na_2O + K_2O + Li_2O)$ is equal to or smaller than 0.10 in terms of mass ratio.

9. The borosilicate glass for a pharmaceutical container according to any one of claims 1 to 8,
   wherein $CaO/(Na_2O + K_2O + Li_2O)$ is 0 to 0.10 in terms of mass ratio.

10. The borosilicate glass for a pharmaceutical container according to any one of claims 1 to 9,
    wherein $K_2O/Na_2O$ is 0.2 to 1 in terms of mass ratio.

11. The borosilicate glass for a pharmaceutical container according to any one of claims 1 to 10,
    wherein $Al_2O_3/(Na_2O + K_2O + Li_2O)$ is 0.7 to 1.5 in terms of mass ratio.

12. The borosilicate glass for a pharmaceutical container according to any one of claims 1 to 11,
    wherein, in a glass grains test method of a hydrolytic resistance test based on EP 8.0, a consumption of 0.02 mol/L hydrochloric acid per unit glass mass is equal to or smaller than 0.030 mL.

13. The borosilicate glass for a pharmaceutical container according to any one of claims 1 to 12, wherein, in an acid resistance test based on DIN12116, a weight loss per area is equal to or smaller than 1.0 mg/dm$^2$.

14. The borosilicate glass for a pharmaceutical container according to any one of claims 1 to 13, wherein a working temperature is 1150°C to 1250°C.

15. The borosilicate glass for a pharmaceutical container according to any one of claims 1 to 14, wherein a liquidus viscosity is equal to or greater than $10^{4.5}$dPa·s.

16. A glass tube for a pharmaceutical container, comprising a borosilicate glass for a pharmaceutical container according to any one of claims 1 to 15.

17. A glass tube for a pharmaceutical container, comprising a borosilicate glass, wherein the borosilicate glass includes $SiO_2$, $Al_2O_3$, $B_2O_3$, and $R_2O$ (R is one or more kinds selected from Li, Na, and K) as essential components, and substantially does not include BaO, a bend of the glass tube is equal to or smaller than 6.0 mm, and a thickness deviation of the glass tube is equal to or smaller than 15%.

18. The glass tube for a pharmaceutical container according to claim 17, wherein the borosilicate glass includes 70.0% to 75.5% of $SiO_2$, 6.3% to 11.0% of $Al_2O_3$, 3.0% to 11.5% of $B_2O_3$, 4.0% to 8.5% of $Na_2O$, 0% to 5.0% of $K_2O$, and 0% to 0.2% of $Li_2O$ in terms of mass%.

19. A glass tube for a pharmaceutical container, comprising a borosilicate glass, wherein the borosilicate glass includes $SiO_2$, $Al_2O_3$, $B_2O_3$, and $R_2O$ (R is one or more kinds selected from Li, Na, and K) as essential components, and substantially does not include BaO, and a value of (atomic concentration of Na)/(atomic concentration of Na + atomic concentration of Si) in a region from an inner surface of the glass tube to a depth of 200 nm is equal to or greater than 0.01 and smaller than 0.5.

20. The glass tube for a pharmaceutical container according to claim 19, wherein the borosilicate glass includes 65% to 80% of $SiO_2$, 5% to 15% of $Al_2O_3$, 2% to 12% of $B_2O_3$, 3% to 10% of $Na_2O$, 0% to 5% of $K_2O$, 0% to 5% of $Li_2O$, 0% to 5% of MgO, 0% to 5% of CaO, and 0% to 5% of SrO in terms of mass%, and a value of $Al_2O_3$/($Na_2O$ + $K_2O$ + $Li_2O$ + MgO + CaO + SrO + $B_2O_3$) is 0.35 to 0.60 in terms of mass ratio.

21. A pharmaceutical container, comprising a borosilicate glass for a pharmaceutical container according to any one of claims 1 to 15.

22. A manufacturing method for a pharmaceutical container, in which the pharmaceutical container is manufactured using a glass tube for a pharmaceutical container according to any one of claims 16 to 20.

## FIG. 1

Na/(Na+Si) vs DEPTH FROM INNER SURFACE OF TUBULAR GLASS(nm)

## FIG. 2

Na/(Na+Si) vs DEPTH FROM INNER SURFACE OF TUBULAR GLASS(nm)

# FIG. 3

## INTERNATIONAL SEARCH REPORT

| | International application No. |
|---|---|
| | PCT/JP2016/075135 |

| A. CLASSIFICATION OF SUBJECT MATTER |
|---|
| *C03C3/091*(2006.01)i, *A61J1/05*(2006.01)i, *C03B23/09*(2006.01)i, *C03C3/093* (2006.01)i, *C03C3/11*(2006.01)i |

According to International Patent Classification (IPC) or to both national classification and IPC

| B. FIELDS SEARCHED |
|---|
| Minimum documentation searched (classification system followed by classification symbols) |
| C03C3/091, A61J1/05, C03B23/09, C03C3/093, C03C3/11 |

Documentation searched other than minimum documentation to the extent that such documents are included in the fields searched

| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y<br><br>A | JP 2013-245124 A  (Nippon Electric Glass Co., Ltd.),<br>09 December 2013 (09.12.2013),<br>paragraphs [0016], [0050]; table 3, composition C<br>(Family: none) | 1-4,6,10-16, 21,22<br>5,7-9,17-20 |
| Y | JP 2014-214084 A  (Schott AG.),<br>17 November 2014 (17.11.2014),<br>paragraphs [0012], [0043] to [0045]<br>& US 2014/0323287 A1<br>paragraphs [0018], [0051] to [0053]<br>& EP 2796431 A1          & DE 102013207634 A<br>& CN 104118989 A | 1-4,6,10-16, 21,22 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 October 2016 (31.10.16) | 08 November 2016 (08.11.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2016/075135

C (Continuation). DOCUMENTS CONSIDERED TO BE RELEVANT

| Category* | Citation of document, with indication, where appropriate, of the relevant passages | Relevant to claim No. |
|---|---|---|
| Y | JP 7-206472 A (Nippon Electric Glass Co., Ltd.), 08 August 1995 (08.08.1995), paragraph [0004] (Family: none) | 1-4,6,10-16, 21,22 |
| Y | JP 2010-168233 A (Nippon Electric Glass Co., Ltd.), 05 August 2010 (05.08.2010), paragraphs [0004], [0035], [0071], [0093] & US 2011/0274916 A1 paragraphs [0004], [0036], [0071], [0091] & US 2014/0230492 A1 & WO 2010/084670 A1 & CN 102099308 A | 1-16,21,22 |
| Y A | JP 2015-98430 A (Nippon Electric Glass Co., Ltd.), 28 May 2015 (28.05.2015), claims 1 to 17; table 1, for example, no.1 to 3 (Family: none) | 1-16,21,22 17-20 |
| A | JP 3-297047 A (Ushio Inc.), 27 December 1991 (27.12.1991), page 2, upper left column, line 10 to upper right column, line 6 (Family: none) | 17,18 |
| A | JP 2008-266082 A (AGC Techno Glass Co., Ltd.), 06 November 2008 (06.11.2008), claim 4; paragraphs [0002] to [0004], [0019] (Family: none) | 19,20 |

Form PCT/ISA/210 (continuation of second sheet) (January 2015)

**REFERENCES CITED IN THE DESCRIPTION**

**Patent documents cited in the description**

- JP 2014214084 A